(19) Europäisches Patentamt
European Patent Office
Office européen des brevets

(11) Publication number: 0 036 403 A1

# (12) EUROPEAN PATENT APPLICATION

(21) Application number: 81850040.7

(22) Date of filing: 09.03.81

(51) Int. Cl.[3]: C 08 G 18/32
C 08 J 9/04, C 08 K 5/02

(30) Priority: 19.03.80 SE 8002132

(43) Date of publication of application: 23.09.81 Bulletin 81/38

(84) Designated Contracting States: AT BE CH DE FR GB IT LI NL

(71) Applicant: BEROL KEMI AB
S-444 01 Stenungsund(SE)

(72) Inventor: Idström, Bo
Torpsvägen 35
S-444 00 Stenungsund(SE)

(74) Representative: Andersson, Rolf
BEROL KEMI AB Box 851
S-444 01 Stenungsund(SE)

## (54) Method for producing a rigid polyurethane foam.

(57) When manufacturing rigid polyurethane foams a conventional polyfunctional isocyanate is reacted with a specific polyol component in the presence of trichlorofluoromethane or a combination of trichlorofluoromethane and water as blowing agent.

Good miscibility is obtained between trichlorofluoromethane and the polyol component.

EP 0 036 403 A1

0036403

# METHOD FOR THE PRODUCTION OF A RIGID POLYURETHANE FOAM

The present invention relates to a process for the manufacture of a rigid polyurethane foam, in which process a conventional polyfunctional isocyanate is reacted with a specific polyol component in the presence of trichlorofluoromethane or a combination of trichlorofluoromethane and water as blowing agent.

It is a known technique to produce polyurethane foam by reacting an organic polyfunctional isocyanate compound with a polyester polyol or polyether polyol in the presence of trichlorofluoromethane or a combination of trichlorofluoromethane and water as blowing agent, stabilizers and catalysts. In certain cases additives of crosslinking agents are used, i.e. low molecular compounds including at least 2 with isocyanate reactive groups to strengthen the mechanical properties of the foam. Inert fillers may be used in order to modify the properties of the polyurethane foam.

If conventional polyols are diluted too far with inert fillers the mechanical properties of the foam are slightly deteriorated. To compensate this, polyols with high hydroxyl value are used, not 500 which is normal but 700 - 1200 which is equivalent to the hydroxyl value of a typical crosslinking agent. Thus the US Patent 2 953 533 discloses the use of a normal rigid foam polyol and as crosslinking agent a polyfunctional basic alcohol with two tertiary amino groups and at least two primary alcoholic hydroxyl groups for the production of semi-rigid foams containing flame retardants. Through an article in I and EC Product Research and Development 1 (2, 92 1962) it is also known that this type of basic alcohol mixed with tall oil can be used to produce rigid polyurethane foams. According to another suggestion accounted for in Chemical Abstracts volume 90, 1979, 169631 A, a triethanolamine may be reacted with a polyfunctional isocyanate

in the presence of tall oil, flame retardant, emulsifier and blowing agent in order to obtain a rigid polyurethane foam. Furthermore, the Swedish application 7604419-7 describes the manufacture of rigid to semi-rigid foams by utilizing a polyol with high hydroxyl value. Examples of suitable polyols are triethanolamine or triisopropanolamine. The intention is to be able to use inert fillers without reducing the reactivity of the system too much.

In these cases compatibility problems often occur. For instance the polyol component may not be miscible with water due to its hydrophility or with a hydrophobic filler such as chloroparaffin. Furthermore, the polyol component and the filler can be too hydrophobic to take up water without forming a turbid solution. There are reasons to believe that the compatibility problem is one of the factors that makes the production of rigid polyurethane foams having a high percentage of fillers difficult due to low foaming stability and also often causes cured foams with bad mechanical strength.

It has now been found that by using a polyol component of a carefully specified type good miscibility can be obtained with both trichlorofluoromethane and most types of fillers at room temperature. According to the present invention a polyfunctional isocyanate is reacted with a polyol component containing secondary hydroxyl groups amounting to 30 - 80% by weight based on the total number of hydroxyl groups and essentially containing one or more polyols having the general formula

$$HOR^{I} - \underset{\substack{| \\ R^{III}OH}}{N} - R^{II}OH$$

where $R^{I}$, $R^{II}$ and $R^{III}$ are alkyl residues with 2 - 3 carbon atoms, in the presence of trichlorofluoromethane or a combination of trichlorofluoromethane and water as blowing

agent, organic liquid fillers and if desired other conventional components in polyurethane connections. The process of the invention is easy to carry out and result in polyurethane foams with physical properties meeting high demands. Thus fillers can be used in amounts up to 200% calculated on the weight of the polyol without waiving the mechanical properties of the foam.

The polyol component according to the present invention reveals a modest self-catalyzing effect and it has a viscosity well adjusted to the equipment normally used. Examples of polyol compounds according to this definition are diisopropanolmonoethanolamine and monoisopropanoldiethanolamine. Within the scope of the invention it is also possible to use mixtures of polyol compounds, where each polyol compound does not fall within the definition, but where the mixture displays the necessary characteristic properties. Such a mixture is triethanolamine and triisopropanolamine with the molecular proportions 1:2. Particularily suitable polyol components are those having a secondary hydroxyl content of 50 - 75% by weight of the total number of hydroxylgroups. Such polyol components show good compatibility and well adjusted reactivity.

As polyol component diisopropanolmonoethanolamine is particularily preferred as it shows good handling properties and forms a liquid product at all temperatures normally occuring during storage. Furthermore, diisopropanolmonoethanolamine has proved to be miscible with and does often give stable solutions with trichlorofluoromethane and hydrophobic fillers, such as chlorinated paraffins. By using diisopropanolmonoethanol based polyol component to produce rigid polyurethane foams with a blowing agent, which at least partly is made of trichlorofluoromethane, foam products of a considerable better quality are obtained by using polyol components of triethanolamine or triisopropanolamine.

The organic isocyanate compounds which can be used according to the present invention have to be at least difunctional. Examples are diphenylmethandiisocyanate and polyphenylpolymethylenepolyisocyanate or mixtures thereof.

Preferred isocyanates are those comprised by the general formula

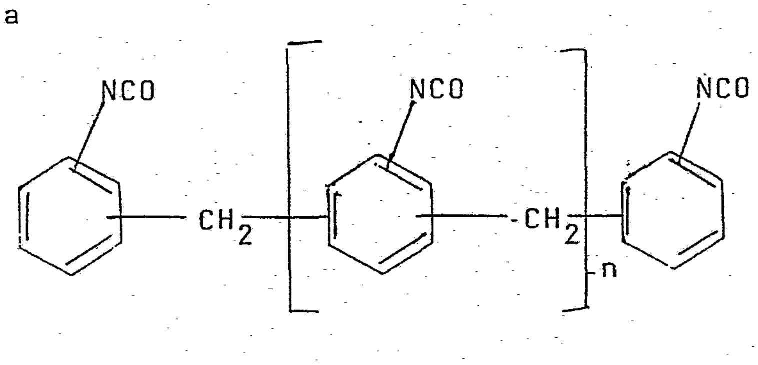

where n has an average value of 0,0 - 1,5.

The amount of polyfunctional isocyanates added may vary within wide limits. Generally should the amount of isocyanate be chosen so that the proportions between the number of isocyanate groups and the number of reactive hydrogen atoms are mainly derived from the polyol component but also other components in the reaction mixture, such as water, can show reactive hydrogen atoms and they shall be included when calculating the total number of reactive hydrogen atoms.

The reaction between the polyfunctional isocyanate and the polyol component is self-catalyzing, as the polyol component contains tertiary nitrogen atoms. However, the reaction is generally carried out in the presence of one or more catalysts, preferably a tertiary amino catalyst. Examples of suitable tertiary amino catalysts are triethylenediamine, dimethylaminoethanol, dimethylcyclohexylamine, N-ethylmoropholine and tetramethylethylenediamine. Also catalysts of metal organic type, such as tinn-2-ethylhexoat, tinnbutyldilaurat, leadnaftenat can be used but preferably in small amounts and in combination with amino catalysts.

The cell formation and thereby the density of the polyurethane foam is adjusted by adding in a conventional

way trichlorofluoromethane or a combination of water and trichlorofluoromethane. The quantity of trichlorofluoromethane is normally within the intervall 10 -50% by weight of the polyolcomponent and filler, while the amount of water normally is 0 - 2% by weight of filler and polyol.

The filler which may be added to extend the plastic raw-material or to improve the properties of the plastic, such as workability, strength and ability to resist fire, shall be soluble in the polyol component. Examples of fillers improving the flame-resistance of the foam, so-called flame retardants, are organic phosphoron- and/or chloro compounds. These compounds can be both reactive and inert. Specific examples are tricresylphosphate, triphenylphosphate, tris(2-chloropropyl)phosphate and tris(2-etÿl-chloride)phosphate. Particularily preferred flame-retardants according to the present invention are paraffin chlorides, in which the aliphatic chain contains 9 - 30, preferably 12 - 24 carbon atoms and in which the content of chlorine is 20 - 70, preferably 40 - 70% by weight. Other fillers having an effect on the physical characteristics of the polyurethane foam, for instance having an effect on the softness of the plastic and which can be used according to the present invention are castor oil and tall oil. The amount of filler is 1:10 - 65:35 by weight of the polyol component.

In addition to the additives mentioned above, a number of additives which are conventional when producing polyurethane foam may be used. Thus silicone oils can be added and these have a positive effect on the foam stability. Other additives are oxidants, emulsifiers and dyeing agents.

According to an application of the present invention a prepolymer can be prepared by reacting a polyol component or the isocyanate with a stoichiometrical excess of the polyfunctional isocyanate and polyol component respectively and under such conditions that the prepolymer obtains final

isocyanate endgroups and hydroxyl endgroups, respectively. This reactive prepolymer can then be mixed with the remaining polyol component alternatively isocyanate, silicone oil, filler, dyeing agent and any other components and be poured or sprayed in a conventional way, for instance in a mould. If desired, all the starting components can be mixed and the polyurethane reaction can take place in one step. This can be done by first mixing the polyol component, blowing agent, catalysts and borrow material and then add the isocyanate.

The present invention can be further illustrated by the following Examples.

Example 1

The foams mentioned in the table below were produced by mixing inhibitors, silicone oil, catalysts, trichlorofluoromethane and thereafter during intensive agitation add the isocyanate and then quickly pour the mixture into a mould with the dimensions 20x20x20 cm in a quantity of 200 grams, where they were left to react and cure. After conditioning, the physical properties of the foams were tested. The formulation, foaming properties and physical resistance properties are shown in the following table.

Table 1

| Foam | 1 | 2 | 3 | 4 |
|---|---|---|---|---|
| Triethanolamine | 28 | | 100 | |
| Triisopropanolamine | 72 | | | 100 |
| Diisopropanolmonoethanol-amine | | 100 | | |
| Inhibitor | 0,1 | 0,1 | 0,1 | 0,1 |
| Silicone oil | 1 | 1 | 1 | 1 |
| Dimethylcyclohexylamine | 1 | 1 | 1 | 1 |
| Dibutyltinndilaurat | 0,1 | 0,1 | 0,1 | 0,1 |

| | | | | |
|---|---|---|---|---|
| Trichlorofluoromethane | 50 | 50 | 50 | 50 |
| Polyphenylpolymethylene-poluisocyanate, equiv. weight 138 | 234 | 234 | 276 | 216 |
| Isocyanate index | 100 | 100 | 100 | 100 |
| Cream time, sec | 8 | 8 | 10 | 10 |
| Gel time, sec | 37 | 40 | 30 | 60 |
| Tack free, sec | 43 | 45 | - | 90 |
| Climb time, sec | 50 | 50 | - | 120 |
| Observation, cell structure | Good | Good | Collapse | Good |
| Pulverization ability | Accept. | Accept. | - | Too high |
| Density, $kg/m^3$ | 28 | 26,4 | - | 29 |
| Compression strength, kPa | 270 | 250 | - | 220 |

Foams 1 and 2 prepared according to the invention show good physical properties, while the foams 3 and 4 outside the invention are of poor quality.

Example 2

The foams in the table below were prepared by mixing inhibitor, silicone oil, catalysts, filler, trichlorofluoromethane with the polyol component and then the isocyanate under vigorous agitation and the mixture was then poured into an open mould with the dimensions 20x20x20 cm in an amount of 200 gram, where they were left to react and cure. After conditioning the physical properties of the foams were tested. The receptivity, foaming properties and physical resistance properties are shown in the following table.

Table 2

| Foam | 1 | 2 | 3 | 4 | 5 |
|---|---|---|---|---|---|
| Triethanolamine | - | - | 14 | - | 50 |
| Triisopropanolamine (melting point +60°C) | - | - | 36 | 50 | - |
| Diisopropanolmonoethanol-amine | 50 | 50 | - | - | - |

| | | | | | |
|---|---|---|---|---|---|
| Inhibitor | 0,1 | 0,1 | 0,1 | 0,1 | 0,1 |
| Silicone oil | 1 | 1 | 1 | 1 | 1 |
| Dimethylcyclohexylamine | 1 | 0,5 | 1 | 1 | 1 |
| Dibutyltinndilaurat | 0,1 | 0,05 | 0,1 | 0,1 | 0,1 |
| Chloroparaffin | 50 | 50 | 50 | 50 | 50 |
| Trichlorofluormethane | 30 | 30 | 30 | 30 | 30 |
| Polyphenylpolymethylene-polyisocyanate, equiv. weight 138 | 117 | 117 | 117 | 108 | 138 |
| Isocyanate index | 100 | 100 | 100 | 100 | 100 |
| Cream time, sec | 8 | 10 | 8 | 13 | 10 |
| Gel time, sec | 34 | 50 | 30 | 50 | 28 |
| Tack free, sec | 50 | 70 | 40 | 90 | - |
| Climb time, sec | 50 | 70 | 60 | 90 | - |
| Observation cell structure | Fine | Fine | Fine | Fine | Coarse |
| Pulverization ability | Accept. | Accept. | Accept. | Too high | Too high |
| Density, $kg/m^3$ | 33 | 33 | 34 | 32 | 32 |
| Compression strength kPa | 240 | 230 | 240 | 230 | 145 |

Foams 1, 2 and 3, which are prepared according to the invention, show favourable foaming properties and result in foams of high quality. Mixtures 4 and 5, not prepared according to the invention, result in foams which are easily pulverized under wearing. Furthermore, when preparing foam 4 the isopropanolamine has to be heated to 60°C before it could be mixed with the other components. When preparing foam number 5 triethanolamine, chloroparaffin and trichlorofluoromethane were seperated in two layers. Foam number 5 was also heavily discoloured.

Thus, the selection of the polyol component is of critical importance for the process properties and the quality of the cured foam obtained.

CLAIMS

1. A process for the manufacture of a rigid polyurethane foam, in which process the polyolcomponent is reacted with a polyfunctional isocyanate in the presence of trichlorofluoromethane or a combination of trichlorofluoromethane and water as blowing agent and if desired other conventional components, characterized in that the polyol component has a number of secondary hydroxyl groups of 30 - 80% of the total number of hydroxyl units and essentially consists of one or more polyol's having the general formula

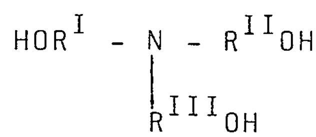

where $R^I$, $R^{II}$ and $R^{III}$ are alkyl residues with 2 - 3 carbon atoms.

2. A process according to Claim 1, characterized in that the reaction takes place in the presence of a filler soluble in the polyol component.

3. A process according to Claims 1 and 2, characterized in that the weight ratio between filler and polyol component is 1:10 - 65:35.

4. A process according to Claims 1, 2 or 3, characterized in that the polyol component is mixed with filler, such as flame retardant or softening agent, before the reaction with the polyfunctional isocyanate.

5. A process according to Claims 1, 2, 3 or 4, characterized in that the filler is a flame retardant such as chloroparaffin.

6. A process according to Claim 5, characterized in that the filler is chloroparaffin with a chlorine content of 20 - 70, preferably 40 - 70% by weight.

7. A process according to Claims 1, 2, 3, 4, 5 or 6, characterized in that the polyfunctional isocyanate is a isocyanate having the general formula

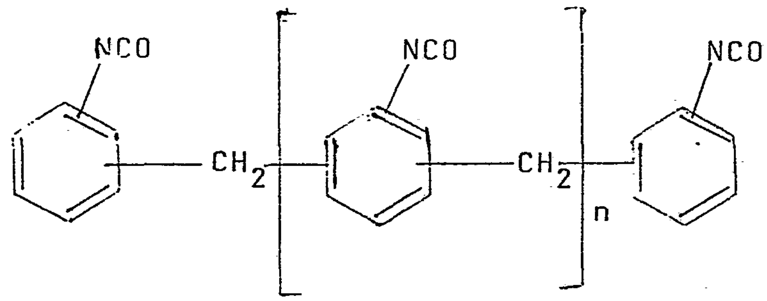

where n has an average value of 0,0 - 1,5.

8. A process according to Claims 1, 2, 3, 4, 5, 6 or 7, characterized in that the polyol is a diisopropanolamine.

9. A process according to Claims 1, 2, 3, 4, 5, 6, 7 or 8, characterized in that the polyol component is a mixture of triethanolamine and triisopropanolamine.

0036403

European Patent Office

# EUROPEAN SEARCH REPORT

Application number EP 81 85 0040.7

## DOCUMENTS CONSIDERED TO BE RELEVANT

| Category | Citation of document with indication, where appropriate, of relevant passages | Relevant to claim |
|---|---|---|
| | US - A - 3 459 671 (MARKLOW et al.)<br>* claims 1, 6; example 1;<br>column 3, line 64 to column 4,<br>line 7 *<br>-- | 1,2,4 |
| | US - A - 3 888 803 (DOERGE et al.)<br>* claim 1;<br>column 2, lines 24 to 30 and 36 to 44,<br>column 4, lines 22 to 25 *<br>-- | 1,7,8 |
| | FR - A1 - 2 309 577 (SEMPIRAN PATENT-VERWERTUNGS GMBH)<br>* claims 1, 2, 3,<br>page 6, lines 3 to 7,<br>page 9, lines 10 to 22 *<br>& DE - A1 - 2 617 358<br>-- | 1,2,5 |
| A | PLASTE UND KAUTSCHUK, Vol. 24, No. 10, 1977, Leipzig<br>GOMMEN et al. "Mischbarkeit von Halogenkohlenwasserstoffen mit Polyäther und niedermolekularen Polyolen"<br>pages 694 to 696<br>* page 695, lines 31 to 38 *<br>---- | |

CLASSIFICATION OF THE APPLICATION (Int. Cl.³)

C 08 G 18/32
C 08 J 9/04
C 08 K 5/02

TECHNICAL FIELDS SEARCHED (Int. Cl.³)

C 08 G 18/00
C 08 J 9/00
C 08 K 5/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 11-06-1981 | MARX |

EPO Form 1503.1 06.78